# EUROPÄISCHE PATENTSCHRIFT

(11) **EP 1 957 261 B1**
(45) Veröffentlichungstag und Bekanntmachung des Hinweises auf die Patenterteilung: **06.05.2009**
(21) Anmeldenummer: 06807040.8
(22) Anmeldetag: 06.10.2006
(51) Int. Cl.: B29D 30/20

(54) **TRANSPORT- UND FERTIGUNGSSYSTEM ZUR VERWENDUNG BEIM AUFBAU VON REIFENROHLINGEN**
TRANSPORT AND PRODUCTION SYSTEM FOR USE IN BUILDING UP TYRE BLANKS
SYSTÉME DE TRANSPORT ET DE FABRICATION DESTINÉ À ÈTRE UTILISÉ DANS LA CONFECTION D'ÉBAUCHES DE BANDAGE PNEUMATIQUE

(30) Priorität: 22.11.2005 DE 102005055609
(43) Veröffentlichungstag der Anmeldung: 20.08.2008
(73) Patentinhaber: Continental Aktiengesellschaft, 30165 Hannover (DE)
(72) Erfinder: WINKLER, Jens, 30173 Hannover (DE); LUDWIG, Jens, 30173 Hannover (DE); LINNE, Stefan, 30900 Wedemark (DE); THOMFOHRDE, Claudia, 38542 Leiferde (DE)
(74) Vertreter: Finger, Karsten
(86) Internationale Anmeldenummer: PCT/EP2006/067138
(87) Internationale Veröffentlichungsnummer: WO 2007/060054

(56) Entgegenhaltungen:
- EP-A2- 0 448 407
- EP-B1- 0 776 756
- US-A- 4 443 290

## Beschreibung

Die Erfindung betrifft ein Transport- und Fertigungssystem zur Verwendung beim Aufbau von Reifenrohlingen, welche zumindest eine Karkasslage, eine Innenschicht, Seitenwände, zwei Kerne mit Kernprofilen, ein Gürtelpaket mit mindestens zwei Gürtellagen und einer Bandage sowie einen Laufstreifen aufweisen, unter Einsatz von Trommeln (Aufbautrommeln), welche auf Transporteinrichtungen positionierbar sind, welche entlang zumindest eines geschlossenen Transportweges bewegbar sind, an welchem Stationen zum Aufbauen von Reifenbauteilen anfahrbar sind.

Aus der EP 0 776 756 B1 ist eine Vorrichtung zum Aufbauen eines Fahrzeugluftreifens bekannt, bei welcher Aufbautrommeln entlang einer geschlossenen Bahn bewegt werden. Die Reifenkarkasse wird an vier Karkassaufbaustationen, die örtlich voneinander getrennt angeordnet sind und zwischen welchen die Trommeln gesteuert bewegbar sind, aufgebaut. An jeder der Karkassaufbaustationen ist zumindest eine Bestückungseinrichtung zur Bestückung der Karkasstrommel vorgesehen. Die Anlage weist ferner zumindest zwei Gürtelaufbaustationen auf, von welchen die eine zum Aufbauen der Gürtellagen auf einer Gürteltrommel und die andere zum Aufbauen des Laufstreifens auf die bereits aufgelegten Gürtellagen vorgesehen ist. Die beiden Gürtelaufbaustationen sind ebenfalls örtlich voneinander getrennt und es ist die Gürteltrommel zwischen den beiden Gürtelaufbaustationen gesteuert bewegbar. Auch jede Gürtelaufbaustation ist jeweils mit zumindest einer Bestückungseinrichtung zur Bestückung der Gürteltrommel mit den entsprechenden Bauteilen versehen. Des Weiteren ist eine Vorrichtung zum Zusammenführen der in den Karkassaufbaustationen aufgebauten Karkassen und der in den Gürtelaufbaustationen aufgebauten Gürtelpakete vorgesehen.

Bei dieser bekannten Vorrichtung erfolgt der Aufbau des Rohreifens mit Hilfe von bewegten Bautrommeln in einer Art Kreisverkehr, d.h. die Bautrommeln fahren nacheinander verschiedene Bearbeitungsstationen an, bei welchen einzelne oder Gruppen von Reifenbauteilen auf die Bautrommeln aufgelegt werden. Es gibt daher bei dieser bekannten Vorrichtung eine feste Abfolge der Bearbeitungsstationen, wobei zwar nicht jeder Rohreifen bei sämtlicher Bearbeitungsstationen bestückt werden muss, es ist jedoch kein Ausweichen oder "Überholen" möglich. Wird bereits an der ersten Bearbeitungsstation ein Qualitätsmangel oder Ausschuss festgestellt, so muss der Rohling bis zur Möglichkeit der Entnahme jede Station anfahren, wodurch die Fertigungskapazität blockiert wird. Bei einer Fertigungssequenz mit unterschiedlichen Spezifikationen der Reifen muss jede Trommel jede der Bearbeitungsstationen anfahren, auch dann, wenn dort der ausgeführte Bearbeitungsschritt für das Produkt der betreffenden Spezifikation nicht vorgesehen ist. Auch dies wirkt sich nachteilig auf die Fertigungskapazität aus. Des weiteren müssen die Verfahrbewegungen der nacheinander fahrenden Trommeln aufeinander abgestimmt sein, das heißt, dass sämtliche Trommeln zeitgleich anfahren und bremsen müssen.

Der Erfindung liegt die Aufgabe zugrunde, ein wesentlich variableres Transport- und Fertigungssystem zum Aufbauen von Reifenrohlingen oder Teilen von Reifenrohlingen vorzuschlagen, welches die angeführten Nachteile der bekannten Vorrichtung nicht aufweist.

Die Erfindung bezieht sich auf ein Transport- und Fertigungssystem gemäß dem Anspruch 1.

Vorteilhafte Ausgestaltungen der Erfindung sind Gegenstand der abhängigen Ansprüche.

Gelöst wird die gestellte Aufgabe erfindungsgemäß dadurch, dass an ausgewählten Aufbaustationen jeweils zumindest zwei alternativ anfahrbare Stationen vorgesehen sind.

Gemäß der Erfindung sind durch alternativ anfahrbare Stationen an ausgewählten Aufbaustationen optimale Wahlmöglichkeiten in der Fertigung eines Rohreifens zur Verfügung gestellt und damit eine große Flexibilität in der Bewegbarkeit der Bautrommeln von Station zu Station zugelassen. Mit einem erfindungsgemäßen Transport- und Fertigungssystem ist beispielsweise die Möglichkeit gegeben, auf einer eingeschleusten

Trommel einen Rohreifen einer bestimmten Spezifikation , auf einer nachfolgend eingebrachten Trommel einen Rohreifen einer anderen Spezifikation aufzubauen. Die alternativen Stationen gestatten auch ein "Durchschleusen" von Trommeln ohne eine Bearbeitung durchzuführen. Mit der Erfindung lassen sich somit eine Vielzahl unterschiedlichst spezifizierter Rohreifen mit einer großen Flexibilität herstellen.

Die alternativ anfahrbaren Stationen können gemäß einer Ausführungsvariante des Transport- und Fertigungssystems Alternativen der jeweiligen Aufbaustation sein. An solchen Stationen werden Varianten eines Reifenbauteils oder einer Reifenbauteilgruppe aufgebracht, beispielsweise Laufstreifen aus unterschiedlichen Kautschukmischungen oder unterschiedliche Kern/Apex/Flipper-Kombinationen.

Die alternativ anfahrbaren Stationen können aber auch zu unterschiedlichen Aufbaustationen gehören. Auf diese Weise können Reifen verschiedener Spezifikationen besonders rationell auf verschiedene Weise aufgebaut werden.

Sehr zeitsparend gestaltet sich der Aufbau der Rohreifen, wenn die oder zumindest einige der alternativ anfahrbaren Stationen von der entsprechenden Anzahl von Trommeln gleichzeitig angefahren werden.

Bei einer besonders vorteilhaften Ausführung des erfindungsgemäßen Transport- und Fertigungssystems weist der Transportweg rasterartig angeordnete Transportwegelemente auf oder besteht aus rasterartig angeordneten Transportwegelementen. Diese werden derart angeordnet, dass an einander anschließende Rasterelemente zumindest einen Eckpunkt gemeinsam haben. Damit wird eine besonders variable Möglichkeit der Fertigung bzw. des Aufbaus von Rohreifen zur Verfügung gestellt, da je nach Auslegung der einzelnen Rasterelemente eine Vielzahl unterschiedlichst spezifizierter Rohreifen aufbaubar ist. Besonders günstig ist eine Anordnung der Rasterelemente mit Eck- bzw. Knotenpunkten, welche bis zu drei Alternativen zum Weitertransport einer Trommel aufweisen.

Eine einfachere Ausführung des Transport- und Fertigungssystems sieht vor, dass die Trommeln während ihres Transportes ihre ursprüngliche, beim Einschleusen festgelegte Ausrichtung beibehalten. Bei einer anderen Alternative ist vorgesehen, dass die Trommeln an Eckpunkten derart drehbar sind, dass entweder ihre Ausrichtung an die Transportrichtung angepasst wird oder, dass sie beliebig drehbar sind, insbesondere in Schritten von 90°. Durch eine Drehung der Trommeln kann auf eine besonders vorteilhafte Zugänglichkeit der Trommeln beim nächsten vorgesehenen Aufbauschritt geachtet werden.

Ein erfindungsgemäßes Transport- und Fertigungssystem kann jene Stationen aufweisen, die zum Aufbauen von Reifenkarkassen zu fertigen Rohreifen vorgesehen bzw. erforderlich sind. Das Transport- und Fertigungssystems kann jedoch auch mit jenen Stationen versehen werden, welche zum Aufbauen von Reifenkarkassen erforderlich sind.

Schließlich lässt sich ein erfindungsgemäßes Transport- und Fertigungssystem vorteilhafter Weise auch derart auslegen, dass es ein Modul mit Stationen zum Aufbauen von Reifenkarkassen und ein Modul mit Stationen zum Aufbauen von fertigen Rohreifen aus Reifenkarkassen aufweist.

Weitere Merkmale, Vorteile und Einzelheiten der Erfindung werden anhand der Zeichnung, die schematisch Ausführungsbeispiele der Erfindung darstellt, näher beschrieben. Dabei zeigen

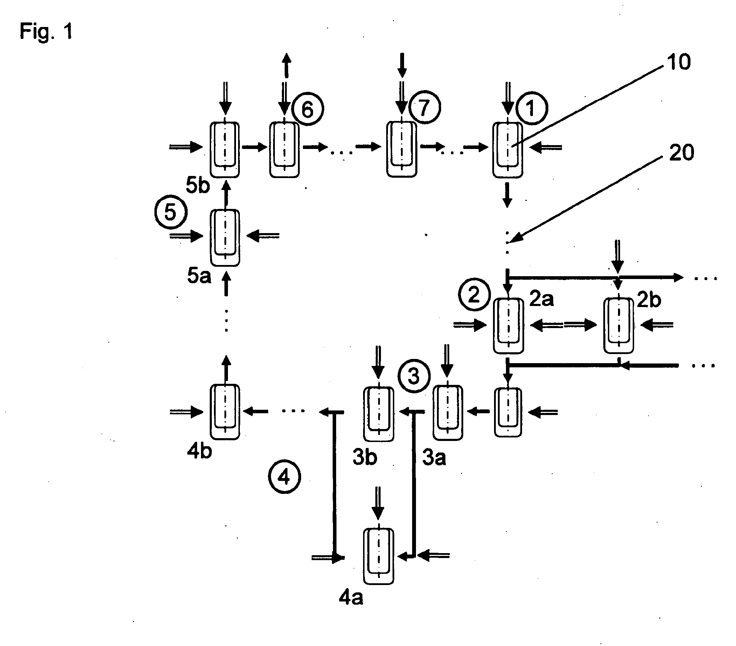

Fig. 1 bis Fig. 8 Darstellungen unterschiedlicher Ausführungsvariariten von erfindungsgemäßen Transport- und Fertigungssystemen zur Fertigung von Reifenrohlingen oder Teilen von Reifenrohlingen.

Die in den Figuren 1 bis 8 gezeigten Ausführungsformen eines Transport- und Fertigungssystems werden nachfolgend anhand des Aufbaus einer Reifenkarkasse zum fertigen Reifenrohling und anhand des Aufbaus einer Reifenkarkasse näher beschrieben.

Die zum fertigen Reifenrohling aufzubauende Reifenkarkassen kann auf einer konventionellen ortsfesten Karkassstation aufgebaut werden. Die in das erfindungsgemäße Transport- und Fertigungssystem eingeschleusten Reifenkarkassen können unterschiedliche Spezifikationen aufweisen, wobei nachfolgend beispielhaft drei erwähnt sind. Gemäß einer möglichen Spezifikation A weist die fertige Reifenkarkasse eine Innenschicht, eine Karkasslage und zwei Kernpakete bestehend aus Wulstkernen und Kernprofilen auf. Bei einer anderen möglichen Spezifikation B sind beispielsweise die beiden Kernpakete mit Verstärkungslagen umgeben. Eine weitere mögliche Spezifikation C weist zwei Karkasslagen auf. Die Spezifikationen A, B und C sind, wie erwähnt, nur beispielhaft, es sind weitere, hier nicht näher beschriebene Varianten von Spezifikationen möglich.

Fig. 1 zeigt ein Transport- und Fertigungssystem mit einem in gepunkteten Linien dargestellten Transportweg 20, welcher in sich geschlossen ist. An der Station 7 kann beispielsweise das Einschleusen der Trommeln 10 erfolgen, an der Station 1 das Übertragen der Reifenkarkassen auf die Trommeln 10, an der Station 6 die Entnahme der fertigen Reifenrohlinge und das Ausschleusen der Trommeln 10. Jede Trommel 10 wird an der Einschleusstation 7 auf einer nicht gezeigten Transporteinrichtung, beispielsweise einem Wagen, positioniert und bleibt auf dieser bis zum Verlassen des Systems an der Ausschleusstation 6. Entlang des Transportweges 20 wird eine Vielzahl von Transporteinrichtungen mit Trommeln 10 entlang von Führungseinrichtungen, insbesondere Führungsschienen, von Bearbeitungsstation zu Bearbeitungsstation bewegt. An der ersten Station, der Übergabestation 1, können der Reihe nach Reifenkarkassen gleicher oder unterschiedlicher Spezifikationen, beispielsweise der Spezifikationen A, B, C, auf die Trommeln 10 übertragen werden. An der ersten Bearbeitungsstation 2, welche aus zwei Parallelstationen 2a, 2b besteht, kann bei 2b der Umschlag der Karkasslage an jenen Reifenkarkassen erfolgen, die dies noch benötigen. Reifenkarkassen mit bereits durchgeführtem Karkassumschlag werden bei 2a, einer Leerstation, weitertransportiert.

Als nächste Station wird die Aufbaustation 3 für das Gürtelpaket angefahren. Die Aufbaustation 3 für das Gürtelpaket weist zwei nacheinander anzufahrende Stationen 3a, 3b auf, wobei an der Gürtelstation 3a beispielsweise die erste Gürtellage und an der Gürtelstation 3b die zweite Gürtellage aufgebracht werden. An einer Station 4a, die vor der Station 3b angefahren werden kann, aber nicht angefahren werden muss, kann auf die erste Gürtellage eine Spulbandage aufgebracht werden und anschließend die Trommel 10 in die Position 3b zum Aufbringen der zweiten Gürtellage gefahren werden. Anschließend wird eine Station 4b, an welcher der fertige Gürtel mit einer Spulbandage versehen wird, angefahren. Es ist ferner möglich, zwei Parallelstationen 3a, 3b, die von einer Transporteinrichtung alternativ oder von zwei Transporteinrichtungen gleichzeitig angefahren werden können, vorzusehen. An der Aufbaustation 3a kann beispielsweise ein Gürtelpaket bestehend aus zwei Gürtellagen mittels einer Bestückungseinrichtung auf einer Reifenkarkasse der Spezifikation A positioniert werden. An der Aufbaustation 3b kann beispielsweise eine Reifenkarkasse gleicher oder anderer Spezifikation, beispielsweise der Spezifikation B, mit einem Gürtelpaket versehen werden, das zwei Gürtellagen aufweist, deren Festigkeitsträger einen anderen Winkel mit der Umfangsrichtung einschließen, als die Gürtellagen des an der Station 3a aufgebrachten Gürtelpakets. Die Bestückungseinrichtungen werden von entsprechenden Vorratsvorrichtungen und Förderungseinrichtungen versorgt. An der nächsten von jeder Trommel 10 angefahrenen Station 5a wird der Reifenrohling mit der Laufstreifenbasis versehen. An der anschließenden Station 5b werden die Laufstreifencap und die Seitenwände aufgebracht, sodass der Rohreifen fertig für die Vulkanisation ist. Die fertigen Rohreifen werden an der Station 6 den Trommeln 10 entnommen oder mitsamt den Trommeln 10 dem Kreislauf entnommen.

Fig. 1 zeigt einen Transportweg 20 in der Form eines Rechteckes, wobei an den Eckpunkten keine Drehbewegungen der Transporteinrichtungen durchgeführt werden, so dass die Trommeln 10 entlang des Transportweges 20 immer gleichermaßen in eine bestimmte Richtung orientiert bleiben. Die kurzen Pfeile mit Doppelstrich zeigen die Zugänglichkeit der Trommeln 10 an den einzelnen Stationen 1, 2, 3, 4, 5 und 6, die einfachen Pfeile versinnbildlichen den Transportweg 20 und die Abzweigungen an Aufbaustationen mit mehreren Parallelstationen.

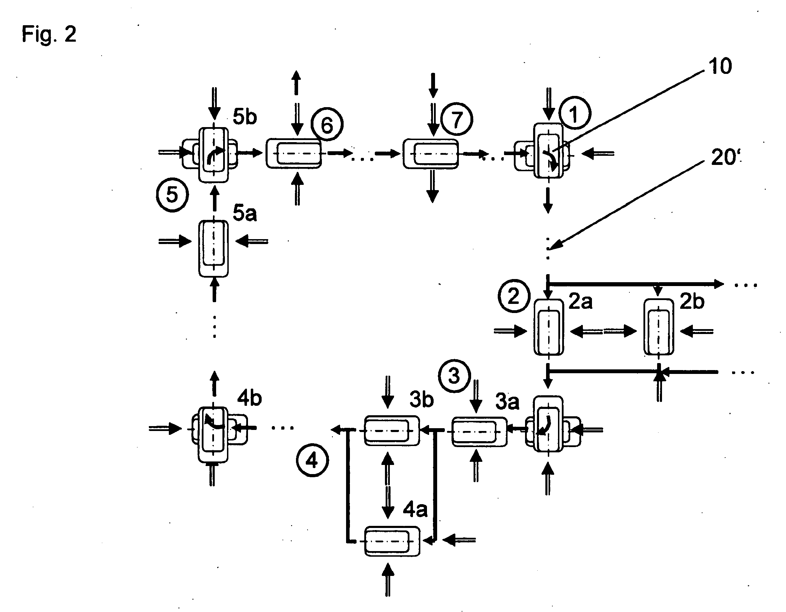

Fig. 2 zeigt eine Alternative der in Fig. 1 gezeigten Anlage mit einem entlang eines Rechtecks verlaufenden Transportweg 20', wobei die Führungseinrichtungen für die Transporteinrichtung derart ausgeführt sind, dass die Transporteinrichtungen mit den Trommeln 10 an den Ecken jeweils um 90° gedreht werden, sodass die Trommeln 10 ihre Ausrichtung bezüglich des Transportweges 20' während des Transports entlang des Weges 20' beibehalten. Auch bei dieser Ausführungsvariante sind die Übergabestation 1, die Gürtelaufbaustation 3 mit zwei Stationen 3a, 3b, die Station 4 mit zwei Parallelstationen 4a, 4b zum Aufbringen der Spulbandagen und die Stationen 5a, 5b zum Aufbringen des Laufstreifens und der Seitenwände vorgesehen. Die Pfeile mit Doppelstrich zeigen die Zugänglichkeit der Trommeln 10 für die Applikation der Bauteile bzw. die Verarbeitung der Bauteile, die Pfeile mit Einfachstrich versinnbildlichen den Fahrweg der Trommeln 10.

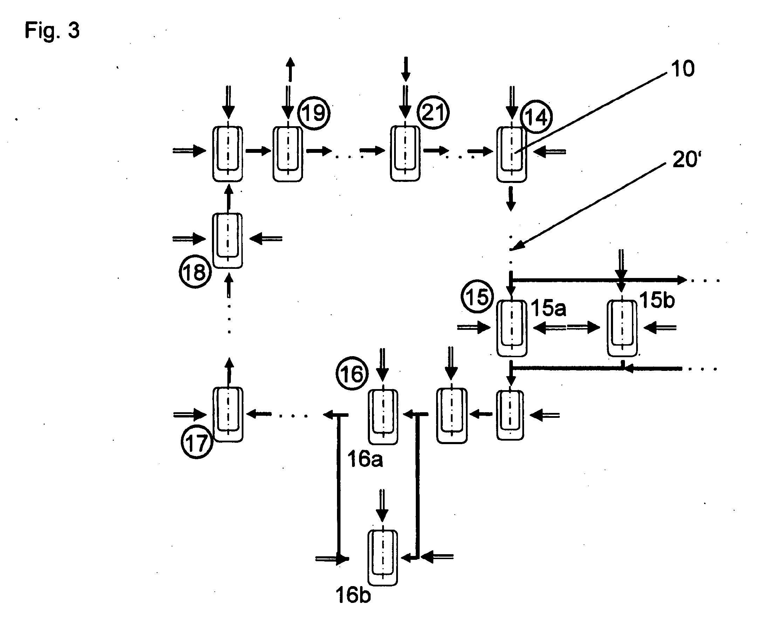

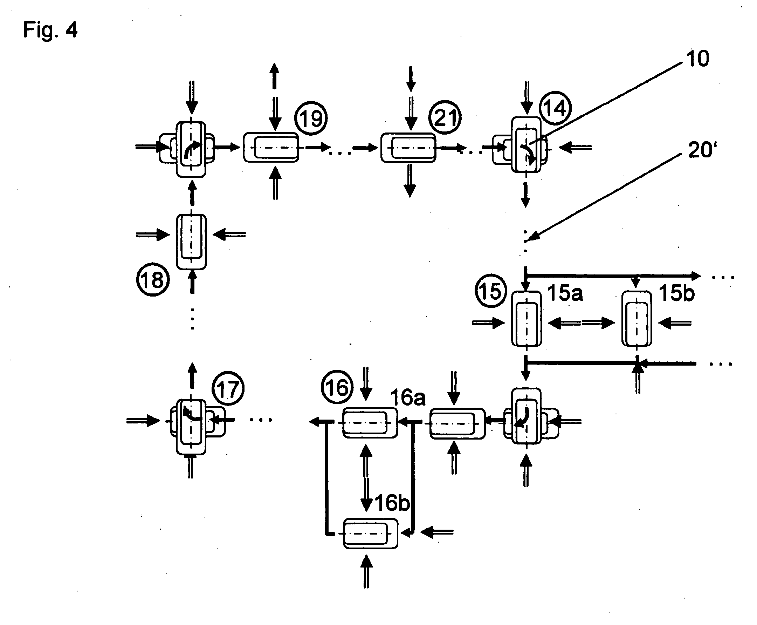

Erfindungsgemäß ausgeführte Transport- und Fertigungssysteme lassen sich auch zum Aufbauen von Reifenkarkassen einsetzen. Fig. 3 und Fig. 4 zeigen zwei Ausführungsvarianten, die weitgehend übereinstimmend, wobei in Fig. 3 die Trommeln 10 ihre ursprüngliche Ausrichtung beibehalten und in Fig. 4 an den Ecken des Transportweges 20' ein Drehen der Trommeln 10 erfolgt, sodass diese ihre Ausrichtung bezüglich der Transportrichtung beibehalten. Bei der Station 21 werden die Trommeln 10 der Reihe nach eingeschleust. An der ersten angefahrenen Station 14 werden die Seitenwände aufgebracht. An den beiden Parallelstationen 15a, 15b der Innenschichtaufbaustation 15 können Innenschichten unterschiedlicher Mischungen aufgebracht werden. Anschließend wird eine Wulstverstärkeraufbaustation 16 angefahren, wobei hier ebenfalls zwei Parallelstationen 16a, 16b vorgesehen sind, an welchen wahlweise Wulstverstärker unterschiedlicher Konstruktionen aufgebracht werden können. Es schließt im Transportweg 20 eine Station 17 an, an welcher die Karkasslage(n) aufgebracht wird bzw. werden. An der Station 18 werden die Kernpakete positioniert. Die fertige Reifenkarkasse wird bei der Station 19 der jeweiligen Trommel 10 entnommen, an der Station 21 werden die Trommeln 10 ausgeschleust.

Die fertige Reifenkarkasse kann mit einem fertig aufgebauten Gürtel/Laufstreifenpaket zu einem fertigen Rohreifen zusammengefügt werden. Alternativ dazu ist es möglich, in einem zweiten Modul eines Transport- und Fertigungssystem die aufgebauten Reifenkarkassen, wie es in Fig. 1 und 2 dargestellt ist, zum fertigen Rohreifen zu komplettieren.

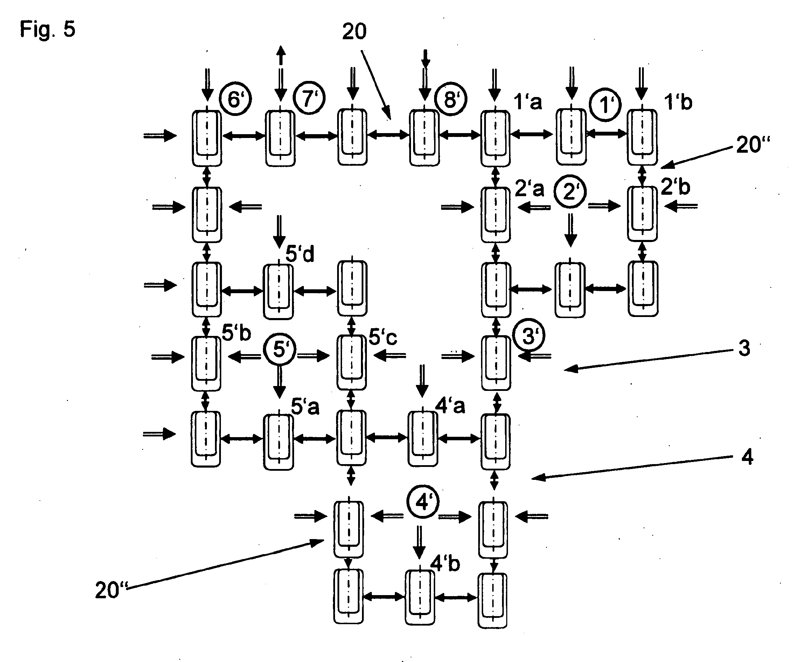

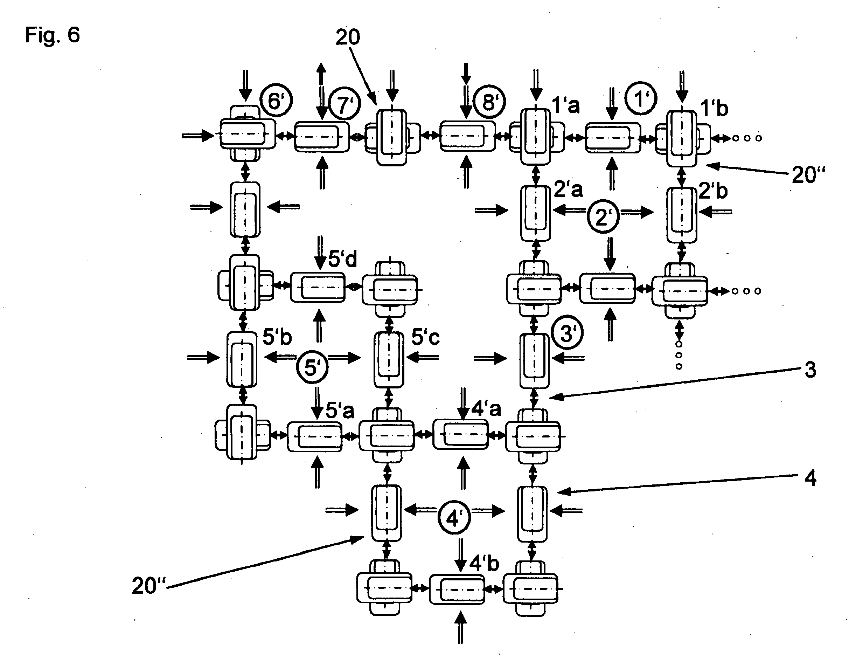

Fig. 5 und 6 zeigen Varianten einer anderen Ausführung eines Transport- und Fertigungssystems zum Aufbauen einer Reifenkarkasse zu einem fertigen Reifenrohling. Der sehr variable Transportweg 20, 20' weist eine Anzahl von geschlossenen, bevorzugt rechteckförmigen und rasterartig angeordneten Elementen 20" auf. Es gibt Rasterelementeckpunkte, an welchen die Transportrichtung vorgegeben ist, dies sind beispielsweise die äußeren Eckpunkte, ferner Rastereckpunkte mit zwei und solche mit drei Wahlmöglichkeiten bezüglich des Transportweges. An der Station 8' erfolgt ein Einschleusen der Trommeln 10, auf welche an zwei Parallelstationen 1'a, 1'b der Übergabestation 1' Reifenkarkassen gleicher oder verschiedener Spezifikation übertragen werden. An dieser Stelle kann der rasterartige Aufbau erweitert werden, um gleichzeitig mehr als zwei Reifenkarkassen auf Trommeln 10 übertragen zu können. Die nachfolgenden Station 2' kann eine Durchschleusestation 2'a und eine Station 2'b aufweisen, an welcher der Karkasslagenumschlag durchgeführt wird. Die bei 1'a oder 1'b übertragenen Karkassen können wahlweise die Stationen 2'a und 2'b anfahren, die in beide Richtungen weisenden Pfeile entlang der Transportwege verdeutlichen diese Möglichkeiten. An der Station 3' wird auf den Karkassen das Gürtelpaket aufgebracht. Auch hier könnten an angeschlossenen Rasterelementen Alternativen zum Aufbauen des Gürtelpaketes zur Verfügung gestellt werden. Die Station 4' bildet ein weiteres Rasterelement mit der Möglichkeit, an zwei Parallelstationen 4'a, 4'b unterschiedliche Spulbandagen, die sich beispielsweise im Material ihrer Festigkeitsträger unterscheiden, aufzubringen. Die Laufstreifen/Seitenwandaufbringstation 5' ist ein eigenes Rasterelement mit einer Station 5'a zum Aufbringen einer Laufstreifenbasis und einer anschließender Station 5'b zum Aufbringen einer Läufstreifencap und der Seitenwandteile. An der parallel angefahrenen Station 5'c könnten eine Laufstreifenbase und eine Laufstreifencap und an der an diese anschließende Station 5'd eine Laufstreifencap aus einer anderen Mischung sowie die Seitenwandteile aufgebracht werden. An der Entnahmestation 6' werden die fertigen Reifenkarkassen entnommen, an der Station 7' die leeren Trommeln 10 ausgeschleust. Bei der in Fig. 6 gezeigten Ausführungsvariante ist an den Eckpunkten der Rasterelemente vorgesehen, die Trommeln 10 drehen zu können, wobei vorgesehen sein kann, dass diese in Schritten von beispielsweise 90, 180 und 270° gedreht werden können, jeweils in Abhängigkeit von den Anforderungen an den anschließenden Stationen im Aufbau des Rohreifens.

Das System aus geschlossenen aber über Eck- und Knotenpunkte miteinander verbundenen Transportbahnteilen bzw. Rasterelementen 20" kann beliebig erweitert werden und ist daher ausgesprochen flexibel auslegbar.

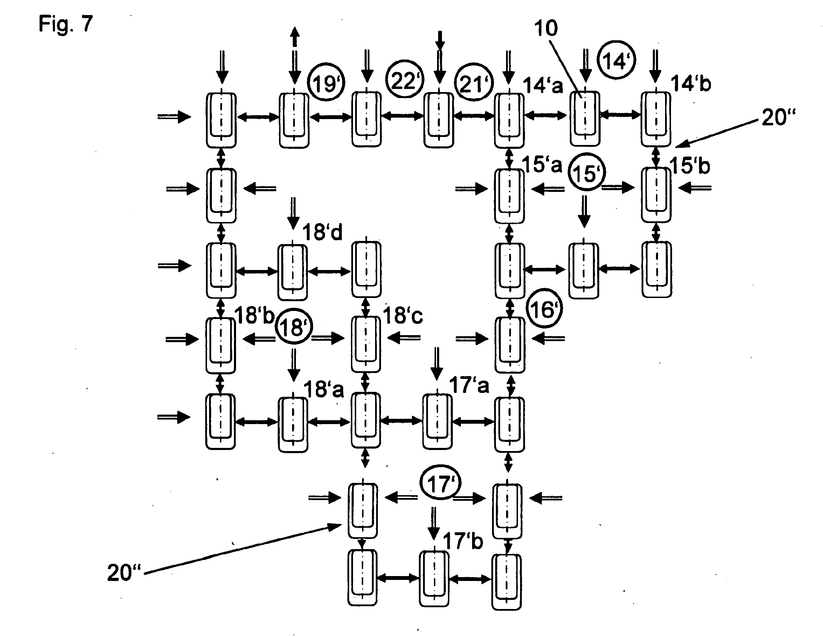

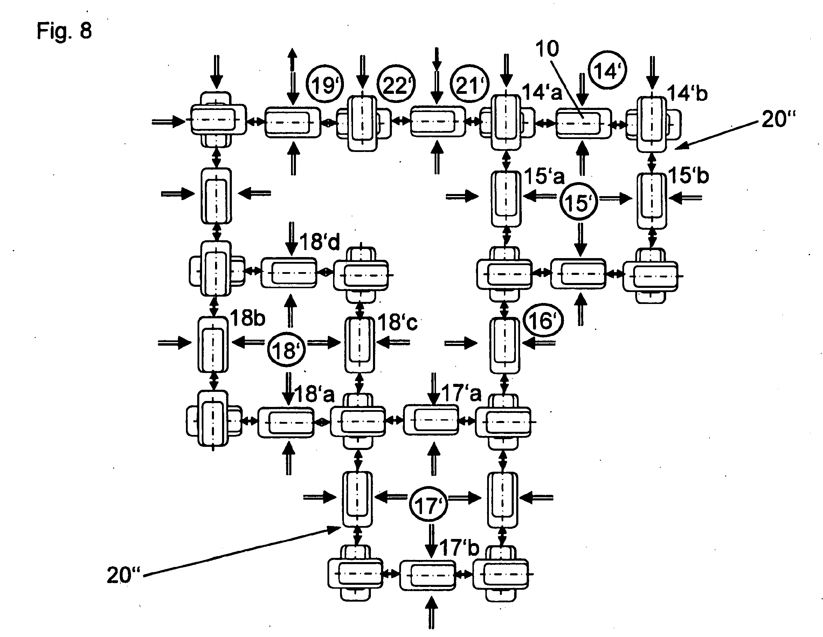

Fig. 7 und 8 zeigen Ausführungen zum Aufbau einer Reifenkarkasse in einem Fertigungssystem mit rasterartig aufgebauten Transportwegelementen 20". Die Ausführungsform gemäß Fig. 8 sieht zusätzlich vor; an Eckpunkten die Trommeln 10, beispielsweise in Schritten von 90°, drehen zu können, analog zur Ausführungsform gemäß Fig. 6.

An der Station 21' werden die Trommeln 10 nacheinander auf die Transporteinrichtungen gesetzt. Die Station 14' zum Aufbringen der Seitenwand weist zwei Alternativen auf, bei 14'a und 14'b könnten beispielsweise Seitenwände unterschiedlicher Mischungszusammensetzungen aufgebracht werden. An der Station 15' mit zwei Parallelstationen 15'a, 15'b können Innenschichten aus zwei verschiedenen Mischungen aufgelegt werden. Anschließend werden an der Station 16' die Wulstverstärker aufgelegt und an der nachfolgenden Station 17', die ebenfalls ein Rasterelement bildet, die Karkasslage. Hier kann an den Stationen 17'a, 17'b zwischen zwei Alternativen von Karkasslagen gewählt werden, die sich beispielsweise bezüglich des Festigkeitsträgermaterials voneinander unterscheiden. Des nächste Rasterelement bildet die Station 18' zum Aufbringen der Kernpakete mit Alternativstationen 18'a, 18'b, 18'c und 18'd zum Aufbringen unterschiedlicher Kern/Apex/Flipper-Kombinationen. bei der Station 19' können die fertigen Reifenkarkassen den Trommeln 10 entnommen werden, bei 22' werden die Trommeln 10 von den Transporteinrichtungen entfernt und ausgeschleust.

Bei sämtlichen Ausführungsvarianten ist die Anzahl der Trommeln 10, die sich innerhalb des Transport- und Fertigungssystems befinden, kleiner oder gleich der Anzahl der möglichen Halte- bzw. Aufbaustationen. Des Weiteren kann an mehr als einer oder zwei Stelle(n) vorgesehen sein, Trommeln 10 einzuschleusen oder auszuschleusen. Die Versorgungseinrichtungen der Trommeln 10 zur Versorgung mit Strom, Luft, Wasser und dergleichen werden mit den Transporteinrichtungen nicht mittransportiert.

## Patentansprüche

1. Transport- und Fertigungssystem zur Verwendung beim Aufbau von Reifenrohlingen, welche zumindest eine Karkasslage, eine Innenschicht, Seitenwände, zwei Kerne mit Kernprofilen, ein Gürtelpaket mit mindestens zwei Gürtellagen und einer Bandage sowie einen Laufstreifen aufweisen, unter Einsatz von Trommeln (10), welche auf Transporteinrichtungen positionierbar sind, welche entlang zumindest eines geschlossenen Transportweges (20, 20') bewegbar sind, an welchem Stationen (2, 3, 4, 5; 14, 15, 16, 17, 18; 1', 2', 3', 4', 5'; 14', 15', 16', 17', 18') zum Aufbauen von Reifenbauteilen anfahrbar sind,
**dadurch gekennzeichnet,**
**dass** an ausgewählten Aufbaustationen (2, 3, 4; 15, 16; 1', 2', 4', 5'; 14', 15', 18') jeweils zumindest zwei alternativ anfahrbare Stationen vorgesehen sind.

2. Transport- und Fertigungssystem nach Anspruch 1, **dadurch gekennzeichnet, dass** die alternativ anfahrbaren Stationen (2a, 2b; 4a; 15a, 15b; 16a, 16b; 1'a, 1'b; 2'a, 2'b; 4'a, 4'b; 5'a, 5'b, 5'c, 5'd; 14'a, 14'b; 15'a, 15'b; 18'a, 18'b, 18'c, 18'd) Alternativen der jeweiligen Aufbaustation sind.

3. Transport- und Fertigungssystem nach Anspruch 1, **dadurch gekennzeichnet, dass** die alternativ anfahrbaren Stationen (3b, 4a) zu unterschiedlichen Aufbaustationen (3, 4) gehören.

4. Transport- und Fertigungssystem nach einem der Ansprüche 1 bis 3, **dadurch gekennzeichnet, dass** alternativ anfahrbaren Stationen (2a, 2b; 3b; 4a; 15a, 15b; 16a" 16b; 1'a, 1'b; 2'a, 2'b; 4'a,4'b; 5'a, 5'b, 5'c, 5'd; 14'a, 14'b; 15'a, 15'b; 18'a, 18'b, 18'c, 18'd) von der entsprechenden Anzahl von Trommeln (10) gleichzeitig anfahrbar ist.

5. Transport- und Fertigungssystem nach einem der Ansprüche 1 bis 4, **dadurch gekennzeichnet, dass** der Transportweg (20, 20') rasterartig angeordnete Transportwegelemente (20") aufweist, welche insbesondere viereckig gestaltet sind und wobei aneinander anschließende Rasterelemente (20") zumindest einen Eckpunkt gemeinsam haben.

6. Transport- und Fertigungssystem nach Anspruch 5, **dadurch gekennzeichnet, dass** Eck- bzw. Knotenpunkte vorhanden sind, welche bis zu drei Alternativen zum Weitertransport einer Trommel (10) aufweisen.

7. Transport- und Fertigungssystem nach einem der Ansprüche 1 bis 6, **dadurch gekennzeichnet, dass** die Trommeln (10) während ihres Transportes ihre ursprüngliche, beim Einschleusen festgelegte Ausrichtung beibehalten.

8. Transport- und Fertigungssystem nach einem der Ansprüche 1 bis 6, **dadurch gekennzeichnet, dass** die Trommeln (10) an den Eckpunkten derart drehbar sind, dass ihre Ausrichtung mit der Transportrichtung übereinstimmt.

9. Transport- und Fertigungssystem nach einem der Ansprüche 1 bis 6, **dadurch gekennzeichnet, dass** die Trommeln (10) an Eckpunkten beliebig, insbesondere in Schritten von 90°, drehbar sind.

10. Transport- und Fertigungssystem nach einem der Ansprüche 1 bis 9, **dadurch gekennzeichnet, dass** es Stationen (2, 3, 4, 5; 1', 2', 3', 4', 5') zum Aufbauen von Reifenkarkassen zu fertigen Rohreifen aufweist.

11. Transport- und Fertigungssystem nach einem der Ansprüche 1 bis 9, **dadurch gekennzeichnet, dass** es Stationen (14, 15, 16, 17, 18; 14', 15', 16', 17', 18') zum Aufbauen einer Reifenkarkasse aufweist.

12. Transport- und Fertigungssystem nach einem der Ansprüche 1 bis 11, **dadurch gekennzeichnet, dass** es ein Modul mit Stationen zum Aufbauen von Reifenkarkassen (14, 15, 16, 17, 18; 14', 15', 16', 17', 18') und ein Modul mit Stationen (2, 3, 4, 5; 1', 2', 3', 4', 5') zum Aufbauen von fertigen Rohreifen aus Reifenkarkassen aufweist.

## Claims

1. Transport and production system for use in building up tyre blanks comprising at least one carcass ply, an inner layer, sidewalls, two bead cores with bead fillers, a belt assembly with at least two belt plies and a bandage as well as a tread rubber, using drums (10), which can be positioned on transporting devices which can be moved along at least one closed transporting path (20, 20'), on which it is possible to call at stations (2, 3, 4, 5; 14, 15, 16, 17, 18; 1', 2', 3', 4', 5'; 14', 15', 16', 17', 18') for building up tyre components, **characterized in that** at least two stations that can be alternatively called at are respectively provided at selected building stations (2, 3, 4; 15, 16; 1', 2', 4', 5'; 14', 15', 18').

2. Transport and production system according to Claim 1, **characterized in that** the stations that can be alternatively called at (2a, 2b; 4a; 15a, 15b; 16a, 16b; 1'a, 1'b; 2'a, 2'b; 4'a, 4'b; 5'a, 5'b, 5'c, 5'd; 14'a, 14'b; 15'a, 15'b; 18'a, 18'b, 18'c, 18'd) are alternatives of the respective building station.

3. Transport and production system according to Claim 1, **characterized in that** the stations that be alternatively called at (3b, 4a) belong to different building stations (3, 4).

4. Transport and production system according to one of Claims 1 to 3, **characterized in that** stations that can be alternatively called at (2a, 2b; 3b; 4a; 15a, 15b; 16a, 16b; 1'a, 1'b; 2'a, 2'b; 4'a, 4'b; 5'a, 5'b, 5'c, 5'd; 14'a, 14'b; 15'a, 15'b; 18'a, 18'b, 18'c, 18'd) can be called at simultaneously by the corresponding number of drums (10).

5. Transport and production system according to one of Claims 1 to 4, **characterized in that** the transport path (20, 20') has transport path elements (20 ") which are arranged in the manner of a grid and are in particular of a rectangular configuration, and in which arrangement grid elements (20 ") adjoining one another have at least one corner point in common.

6. Transport and production system according to Claim 5, **characterized in that** there are corner points or node points which have up to three alternatives for the further transport of a drum (10).

7. Transport and production system according to one of Claims 1 to 6, **characterized in that**, while they are being transported, the drums (10) retain their original alignment, established when they are fed in.

8. Transport and production system according to one of Claims 1 to 6, **characterized in that** the drums (10) can be turned at the corner points in such a way that their alignment coincides with the direction of transport.

9. Transport and production system according to one of Claims 1 to 6, **characterized in that** the drums (10) can be turned as desired at corner points, in particular in steps of 90°.

10. Transport and production system according to one of Claims 1 to 9, **characterized in that** it has stations (2, 3, 4, 5; 1', 2', 3', 4', 5') for building up tyre carcasses into finished green tyres.

11. Transport and production system according to one of Claims 1 to 9, **characterized in that** it has stations (14, 15, 16, 17, 18; 14', 15', 16', 17', 18') for building up a tyre carcass.

12. Transport and production system according to one of Claims 1 to 11, **characterized in that** it has a module with stations for building up tyre carcasses (14, 15, 16, 17, 18; 14', 15', 16', 17', 18') and a module with stations (2, 3, 4, 5; 1', 2', 3', 4', 5') for building up finished green tyres from tyre carcasses.

## Revendications

1. Système de transport et de fabrication pour l'utilisation lors de la construction d'ébauches de bandages pneumatiques, qui présentent au moins une couche de carcasse, une couche interne, des parois latérales, deux noyaux avec des profilés de noyau, un ensemble d'armature avec au moins deux couches d'armature et un bandage ainsi qu'une bande de roulement, utilisant des tambours (10) qui peuvent être positionnés sur des dispositifs de transport qui peuvent être déplacés le long d'au moins une voie de transport fermée (20, 20'), sur laquelle des postes (2, 3, 4, 5 ; 14, 15, 16, 17, 18 ; 1', 2', 3', 4', 5' ; 14', 15', 16', 17', 18') peuvent être amenés pour construire des composants du bandage pneumatique,
**caractérisé en ce que**
l'on prévoit au moins deux postes qui peuvent être amenés en alternance, à partir de postes de construction sélectionnés (2, 3, 4 ; 15, 16 ; 1', 2', 4', 5' ; 14', 15', 18').

2. Système de transport et de fabrication selon la revendication 1, **caractérisé en ce que** les postes qui peuvent être amenés en alternance (2a, 2b ; 4a ; 15a, 15b ; 16a, 16b ; 1'a, 1'b ; 2'a, 2'b ; 4'a, 4'b ; 5'a, 5'b, 5'c, 5'd ; 14'a, 14'b ; 15'a, 15'b ; 18'a, 18'b, 18'c, 18'd) sont des variantes des postes de construction respectifs.

3. Système de transport et de fabrication selon la revendication 1, **caractérisé en ce que** les postes qui peuvent être amenés en alternance (3b, 4a) appartiennent à différents postes de construction (3, 4) .

4. Système de transport et de fabrication selon l'une quelconque des revendications 1 à 3, **caractérisé en ce que** des postes qui peuvent être amenés en alternance (2a, 2b ; 3b ; 4a ; 15a, 15b ; 16a, 16b ; 1'a, 1'b ; 2'a, 2'b ; 4'a, 4'b ; 5'a, 5'b, 5'c, 5'd ; 14'a, 14'b ; 15'a, 15'b ; 18'a, 18'b, 18'c, 18'd) peuvent être amenés simultanément par le nombre correspondant de tambours (10).

5. Système de transport et de fabrication selon l'une quelconque des revendications 1 à 4, **caractérisé en ce que** la voie de transport (20, 20') présente des éléments de voie de transport (20") disposés en forme de trame, qui sont configurés notamment sous forme de quadrilatère, des éléments de trame (20") raccordés l'un à l'autre ayant en commun au moins un coin.

6. Système de transport et de fabrication selon la revendication 5, **caractérisé en ce qu'**il existe des coins ou des noeuds qui présentent jusqu'à trois variantes pour le transport ultérieur d'un tambour (10).

7. Système de transport et de fabrication selon l'une quelconque des revendications 1 à 6, **caractérisé en ce que** les tambours (10) conservent pendant leur transport leur orientation initiale fixée lors de leur introduction.

8. Système de transport et de fabrication selon l'une quelconque des revendications 1 à 6, **caractérisé en ce que** les tambours (10) peuvent tourner sur les coins de telle sorte que leur alignement coïncide avec le sens de transport.

9. Système de transport et de fabrication selon l'une quelconque des revendications 1 à 6, **caractérisé en ce que** les tambours (10) peuvent tourner sur les coins de manière quelconque, notamment par pas de 90°.

10. Système de transport et de fabrication selon l'une quelconque des revendications 1 à 9, **caractérisé en ce qu'**il présente des postes (2, 3, 4, 5 ; 1', 2', 3', 4', 5') pour la construction de carcasses de bandages pneumatiques pour produire des ébauches de bandages pneumatiques finies.

11. Système de transport et de fabrication selon l'une quelconque des revendications 1 à 9, **caractérisé en ce qu'**il présente des postes (14, 15, 16, 17, 18 ; 14', 15', 16', 17', 18') pour construire une carcasse de bandage pneumatique.

12. Système de transport et de fabrication selon l'une quelconque des revendications 1 à 11, **caractérisé en ce qu'**il présente un module avec des postes de construction de carcasses de bandages pneumatiques (14, 15, 16, 17, 18 ; 14', 15', 16', 17', 18') et un module avec des postes (2, 3, 4, 5 ; 1', 2', 3', 4', 5') pour la construction d'ébauches de bandages pneumatiques finies à partir de carcasses de bandages pneumatiques.
